# FASCICULE DE BREVET EUROPEEN

(11) **EP 1 864 391 B1**
(45) Date de publication et mention de la délivrance du brevet: **23.02.2011**
(21) Numéro de dépôt: 05824626.5
(22) Date de dépôt: 02.12.2005
(51) Int. Cl.: H04B 1/707

(54) **PROCEDE ET DISPOSITIF DE SELECTION DE TRAJETS**
PFADAUSWAHLVERFAHREN UND -EINRICHTUNG
PATH SELECTION METHOD AND DEVICE

(30) Priorité: 08.12.2004 FR 0413105
(43) Date de publication de la demande: 12.12.2007
(73) Titulaire: FRANCE TELECOM, 75015 Paris (FR)
(72) Inventeur: CLESSIENNE, Thierry, F-92130 Issy les Moulineaux (FR); BRATSCHI, Sylvain, F-94800 Villejuif (FR)
(74) Mandataire: Jeune, Pascale
(86) Numéro de dépôt international: PCT/FR2005/003041
(87) Numéro de publication internationale: WO 2006/061500

(56) Documents cités:
- EP-A- 1 322 045
- WO-A-02/29996
- US-B1- 6 229 842

## Description

La présente invention se rapporte au domaine des télécommunications. Au sein de ce domaine, l'invention se rapporte plus particulièrement aux communications dites numériques. Les communications numériques comprennent les communications sans fil dont le canal de transmission est le canal aérien.

L'invention concerne un procédé de sélection de trajets dans un canal de transmission multi trajets ainsi qu'un dispositif pour effectuer une telle sélection, un logiciel pour la mise en oeuvre du procédé et un support de ce logiciel. Le procédé fait partie d'un traitement effectué lors de la réception et est généralement localisé dans les couches dites physiques des systèmes de télécommunication.

Les systèmes de télécommunications auxquelles s'applique typiquement l'invention sont les systèmes à étalement de spectre. Parmi ces systèmes, on peut distinguer ceux qui reposent sur les techniques WCDMA (Wide Code Division Multiple Access), MC-CDMA (Multi-carrier Code Division Multiple Access) ou UWB (Ultra Wide Band).

Actuellement, les communications sans fil interviennent principalement dans les réseaux cellulaires, en boucle locale radio et en diffusion hertzienne. La croissance exponentielle des communications sans fil et la rareté du spectre hertzien rend cruciale l'optimisation de la ressource spectrale.

Le canal de transmission est habituellement considéré comme une somme de diracs, c'est-à-dire comme un même signal répété et superposé à lui-même plusieurs fois, avec plusieurs décalages variables. Le traitement lors de la réception comprend habituellement un filtrage adapté suivi d'une corrélation. Après filtrage adapté et pour chaque retard associé à l'un des trajets sélectionnés, une corrélation est effectuée avec le conjugué du code modulant le symbole. Le résultat de la corrélation est multiplié par le conjugué de l'estimée de l'amplitude du trajet et enfin les différents résultats sont sommés.

Lors d'une transmission par un canal aérien, le signal émis peut suivre différents trajets entre l'émetteur et le récepteur. Ainsi, le récepteur peut recevoir différentes répliques retardées et déphasées du signal émis qui s'additionnent de manière constructive et/ou destructive. Dans certains cas d'addition destructive, il peut y avoir un phénomène d'évanouissement total. Pour combattre les phénomènes d'évanouissement importants, les techniques de diversité présentent une efficacité certaine. Ces techniques de diversité se répartissent en différentes catégorie : diversité d'espace, diversité de polarisation, diversité de fréquence, diversité en temps, diversité multi trajets.

Un récepteur en râteau est typiquement adapté pour prendre en compte une diversité multi trajets. Le récepteur synchronise dans ce cas tous les trajets puis les combine grâce à un MRC, Maximum Radio Combining. Ce type de récepteur connaît de nombreuses améliorations depuis l'apparition des systèmes de communication à étalement de spectre tels que UMTS, CDMA 2000.

Lors de la recombinaison, le procédé en réception peut faire intervenir un procédé de sélection. Actuellement, la sélection peut être semi dynamique (algorithme GSC), par seuil ou statique (algorithme MRC).

Les algorithmes de type GSC adaptatifs permettent d'obtenir le meilleur compromis entre la complexité et les taux d'erreurs binaires. Ils possèdent un seuil en sortie, en général un rapport signal à bruit ou SNR (Signal to Noise Ratio) cible, qui permet de déterminer le nombre de doigts du râteau à prendre en compte. Tant que la sortie du récepteur en râteau n'est pas supérieure à ce seuil, le récepteur augmente le nombre de doigts à prendre en compte et donc le nombre de trajets à combiner. Parmi ces algorithmes, on peut distinguer :
- l'algorithme de Kim, Ha et Reed décrit dans le document ayant pour référence : SUK Won Kim, Dong S.Ha, and Je_rey H.Reed. "Minimum Selection GSC and Adaptive Low-Power Rake Combining Scheme", IEEE, 2003. Cet algorithme a pour objectif de garantir un BER, Bit Error Rate, cible en sortie du récepteur.
- l'algorithme de Alouini et Yang décrit dans le document ayant pour référence : Mohamed-Slim Alouini and Hong-Chuan Yang, "MRC diversity with an Ouput Threshold", IEEE ICC', 2004. Cet algorithme reprend le principe de l'algorithme précédent et s'en distingue en ce qu'il additionne des trajets tant que le SNR du signal recombiné n'est pas supérieur à un SNR cible fixé à l'avance.

Ces algorithmes sont désavantageux dans les cas où le SNR obtenu à l'issue de la combinaison de tous les trajets reste inférieur au SNR cible. Pour garantir un SNR instantané en sortie, ces algorithmes sélectionnent tous les trajets bien que les trajets à faible SNR puissent avoir un effet négatif sur le SNR obtenu après combinaison.

La présente invention a pour objectif de remédier aux inconvénients des algorithmes connus, en particulier d'optimiser l'énergie dépensée par le récepteur au regard d'un rapport signal à bruit, SNR, de sortie ; l'optimisation de l'énergie dépensée comprenant la minimisation du nombre d'opérations effectuées.

A cette fin, l'invention a pour objet un procédé de sélection de trajets parmi des trajets issus d'un canal multi trajets. Le procédé de sélection de trajets comprend au moins des étapes :
- de sélection d'un trajet parmi les différents trajets, dont la valeur d'un rapport signal à bruit, SNR, instantané est la plus élevée parmi les valeurs d'un rapport signal à bruit, SNR, instantané des différents trajets,
- d'initialisation de la valeur d'un rapport signal à bruit, SNR, de sortie du récepteur, à la valeur la plus élevée du rapport signal à bruit, SNR, instantané parmi les valeurs du rapport signal à bruit, SNR, instantané des différents trajets,
- d'initialisation d'un trajet courant, à un trajet dont la valeur du rapport signal à bruit, SNR, instantané est inférieure à la valeur du rapport signal à bruit, SNR, instantané du trajet précédemment sélectionné et la plus élevée parmi les valeurs du rapport signal à bruit, SNR, instantané des autres trajets.

Le procédé de sélection de trajets comprend en outre au moins les étapes suivantes qui se déroulent dans une boucle et qui consistent, pour chaque itération de la boucle :
- à sélectionner le trajet courant si une estimation de l'apport relatif du trajet courant sur la valeur du rapport signal à bruit, SNR, de sortie du récepteur dépasse un seuil donné et, sinon, à sortir de la boucle,
- à ajouter à la valeur du rapport signal à bruit, SNR, de sortie du récepteur, la valeur d'un rapport signal à bruit, SNR, instantané du trajet courant,
- à initialiser le trajet courant à un trajet différent des précédents trajets sélectionnés, dont la valeur du rapport signal à bruit, SNR, instantané est la plus élevée parmi les valeurs du rapport signal à bruit, SNR, instantané des différents trajets et inférieure à la valeur du rapport signal à bruit, SNR, instantané du dernier trajet précédemment sélectionné.

En outre, l'invention a pour objet un dispositif de sélection de trajets issus d'un canal multi trajets comprenant :
- un module apte à sélectionner parmi les différents trajets celui dont la valeur d'un rapport signal à bruit, SNR, instantané est la plus élevée parmi les valeurs d'un rapport signal à bruit, SNR, instantané des différents trajets,
- un module apte à initialiser la valeur d'un rapport signal à bruit, SNR, de sortie du récepteur, à la valeur la plus élevée d'un rapport signal à bruit, SNR, instantané parmi les valeurs du rapport signal à bruit, SNR, instantané des différents trajets,
- un module apte à initialiser un trajet courant à un trajet dont la valeur d'un rapport signal à bruit, SNR, instantané est inférieure à la valeur du rapport signal à bruit, SNR, instantané du trajet précédemment sélectionné et la plus élevée parmi les valeurs du rapport signal à bruit, SNR, instantané des autres trajets,
- un module apte à effectuer les étapes suivantes qui se déroulent dans une boucle et qui consistent :
   - à sélectionner le trajet courant si une estimation de l'apport relatif du trajet courant sur la valeur du rapport signal à bruit, SNR, de sortie du récepteur dépasse un seuil donné et, sinon, à sortir de la boucle,
   - à ajouter à la valeur du rapport signal à bruit, SNR, de sortie du récepteur, la valeur du rapport signal à bruit, SNR, instantané du trajet courant,
   - à initialiser le trajet courant à un trajet différent des précédents trajets sélectionnés, dont la valeur du rapport signal à bruit, SNR, instantané est la plus élevée parmi les valeurs du rapport signal à bruit, SNR, instantané des différents trajets et inférieure à la valeur du rapport signal à bruit, SNR, instantané du dernier trajet précédemment sélectionné.

Le procédé et le dispositif conformes à l'invention résolvent le problème posé.

En effet, d'une part la prise en compte successive des trajets en fonction de la valeur de leur SNR permet d'assurer la progression la plus rapide du SNR en sortie et, d'autre part, l'introduction d'une comparaison entre l'apport relatif de chaque trajet sur la valeur du SNR de sortie et un seuil permet de limiter le nombre de trajets sélectionnés.

Ainsi, le nombre de trajets pris en compte par le procédé et le dispositif est minimisé tout en maximisant le rapport signal à bruit en sortie du dispositif ; la minimisation du nombre de trajets contribue à minimiser le nombre d'opérations.

La comparaison de l'apport de chaque trajet, pris selon un ordre décroissant de la valeur du SNR, avec un seuil permet d'éviter des opérations inutiles. En effet, en l'absence de comparaison, le premier trajet arrivé est systématiquement sélectionné. Et, si ce trajet correspond à un trou d'évanouissement alors sa prise en compte conduit à effectuer des opérations qui s'avèrent inutiles et qui augmentent inutilement la complexité du processus de réception. Dans le cas d'un objet selon l'invention, ce trajet est uniquement pris en compte si son apport relatif sur la valeur du SNR de sortie dépasse le seuil fixé.

En outre, le procédé et le dispositif selon l'invention sont avantageux par rapport à un algorithme qui suppose la connaissance à priori du nombre de trajets à sélectionner puisqu'ils permettent de s'affranchir de cette connaissance à priori. Dans les cas où le SNR instantané du signal est inférieur à un SNR cible, l'algorithme en question sélectionne tous les trajets alors qu'un procédé selon l'invention permet de limiter le nombre de trajets sélectionnés. Cette limitation permet de diminuer la complexité par une suppression de calculs inutiles voire ayant en impact négatif sur la valeur du SNR et donc sur une qualité de service (QoS). Plus les trajets ont un faible SNR, plus l'estimation de leur puissance est erronée, et par conséquent plus le SNR en sortie est dégradé.

L'optimisation de la ressource spectrale est prise en compte par un objet selon l'invention par une amélioration des bilans de liaison émetteur-récepteur, ce qui permet d'étendre dans le cas de transmission par un canal aérien la couverture radio pour une puissance d'émission donnée, et par une limitation du volume d'opérations effectuées à la réception pour réduire la consommation du terminal de communication.

Selon une implémentation préférée, les étapes du procédé sont déterminées par les instructions d'un programme de sélection de trajets incorporé dans un dispositif de sélection de trajets, et le procédé selon l'invention est mis en oeuvre lorsque ce programme est chargé dans le dispositif dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le programme d'ordinateur peut être enregistré sur un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Le signal numérique correspondant comprend au moins des codes pour l'exécution par un dispositif de sélection d'un procédé selon l'invention.

Alternativement, le programme d'ordinateur peut être enregistré sur un support d'informations. Ce support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. Le support d'informations peut être un circuit intégré tel qu'un processeur de signal, un ASIC, un circuit dédié ou tout produit équivalent dans lequel le programme est incorporé, le circuit étant adapté pour exécuter ou pour être utilisé dans l'exécution du procédé en question.

L'invention a en outre pour objet un récepteur comprenant un dispositif de sélection de trajets selon l'invention.

L'invention a en outre pour objet un terminal de communication comprenant un dispositif de sélection de trajets selon l'invention.

D'autres caractéristiques et avantages de l'invention apparaîtront lors de la description qui suit faite en regard de figures annexées données à titre d'exemples non limitatifs.
La figure 1 est un organigramme d'un procédé selon l'invention.
La figure 2 est un organigramme d'une réalisation particulière d'un procédé selon l'invention.
La figure 3 est un schéma d'exemples de fonction de pondération pour la détermination des seuils.
La figure 4 est un schéma d'un dispositif de sélection selon l'invention.
La figure 5 est un schéma d'un récepteur radio selon l'invention.

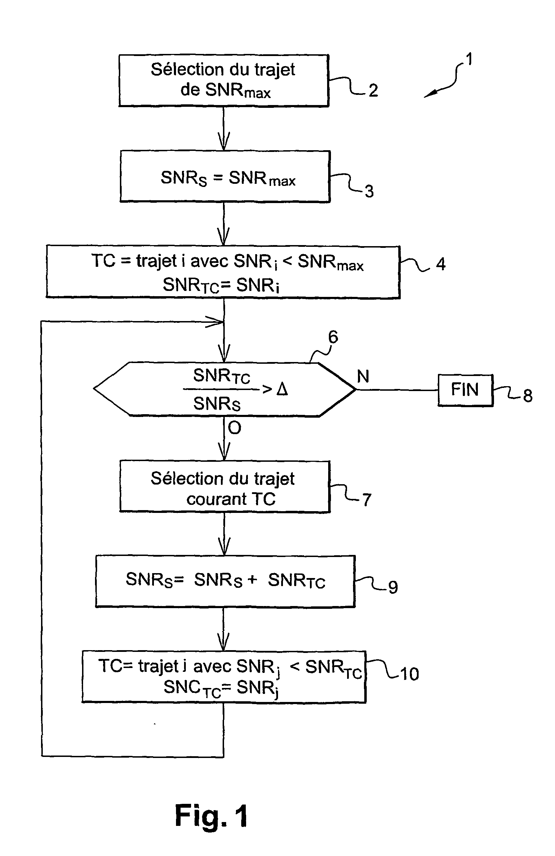

Une réalisation d'un procédé selon l'invention est illustrée par l'organigramme représenté à la figure 1.

Le procédé 1 sélectionne des trajets parmi des trajets issus d'un canal multi trajets. Il comprend au moins les étapes suivantes :

Une étape 2 de sélection d'un trajet parmi les différents trajets issus du canal qui est un canal radio dans un contexte de transmission via un canal aérien. Le trajet sélectionné est celui dont la valeur du SNR instantané est la plus élevée parmi les valeurs du SNR instantané des différents trajets.

Une étape 3 d'initialisation de la valeur du SNR de sortie du récepteur. Cette valeur est initialisée à la valeur la plus élevée du SNR instantané parmi les valeurs du SNR instantané des différents trajets.

Une étape 4 d'initialisation d'un trajet courant. Le trajet courant est initialisé à un trajet dont la valeur du SNR instantané est inférieure à la valeur du SNR instantané du trajet précédemment sélectionné et la plus élevée parmi les valeurs du SNR instantané des autres trajets.

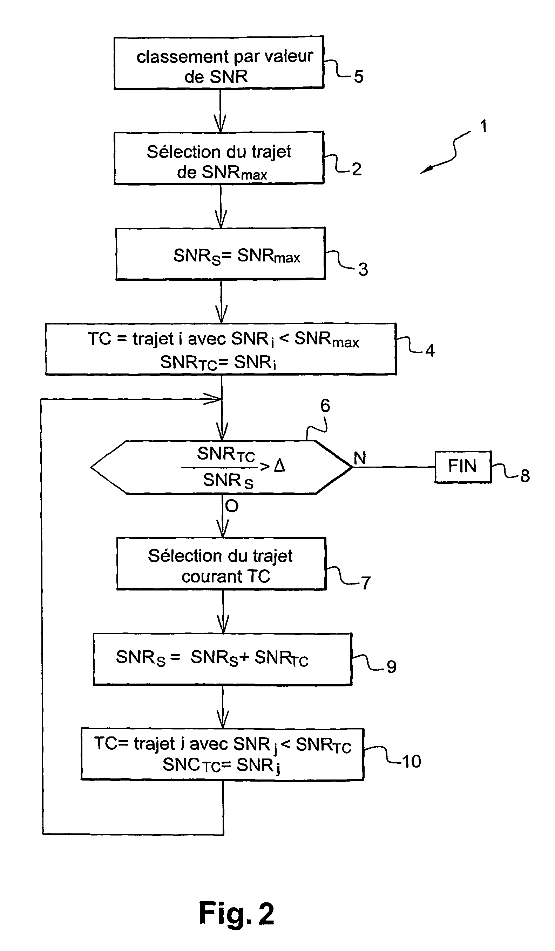

Ainsi, lorsque le procédé comprend en outre une étape 5 de classement des trajets en fonction de la valeur de leur SNR, comme illustré à la figure 2, le trajet courant est le trajet le plus proche du trajet précédemment sélectionné au sein du classement. Si le classement est par ordre de SNR décroissant, il s'agit du trajet suivant le trajet précédemment sélectionné dans le classement, par contre si le classement est par ordre croissant, il s'agit du trajet précédent le trajet précédemment sélectionné dans le classement.

Le procédé comprend en outre au moins les étapes suivantes qui se déroulent dans une boucle.

En début de chaque itération de boucle, une étape 6 de test pour estimer l'apport relatif du trajet courant sur la valeur du SNR de sortie du récepteur. Le trajet courant est sélectionné dans une étape 7 de sélection du trajet courant, si l'estimation de l'apport relatif du trajet courant sur la valeur du SNR de sortie du récepteur dépasse un seuil Δ donné. Si cette estimation ne dépasse pas le seuil alors la boucle est interrompue 8. L'estimation la plus simple de l'apport consiste à calculer le rapport entre la valeur du SNR du trajet courant et la valeur du SNR de sortie du récepteur.

Une étape 9 de calcul du SNR de sortie. La valeur du SNR de sortie du récepteur est augmentée de la valeur du SNR instantané du trajet courant.

Une étape 10 d'initialisation du trajet courant. Le nouveau trajet courant est initialisé à un trajet différent des précédents trajets sélectionnés. Ce trajet est celui dont la valeur du SNR instantané est la plus élevée parmi les valeurs de SNR instantané des différents trajets et inférieure à la valeur du SNR instantané du dernier trajet précédemment sélectionné.

Ainsi, lorsque le procédé comprend en outre une étape 5 de classement des trajets en fonction de la valeur de leur SNR, comme illustré à la figure 2, le nouveau trajet courant est le trajet le plus proche, au sein du classement, du trajet précédemment sélectionné au début de l'itération de la boucle.

A l'issue de l'étape 10 d'initialisation, le procédé reboucle pour débuter une nouvelle itération.

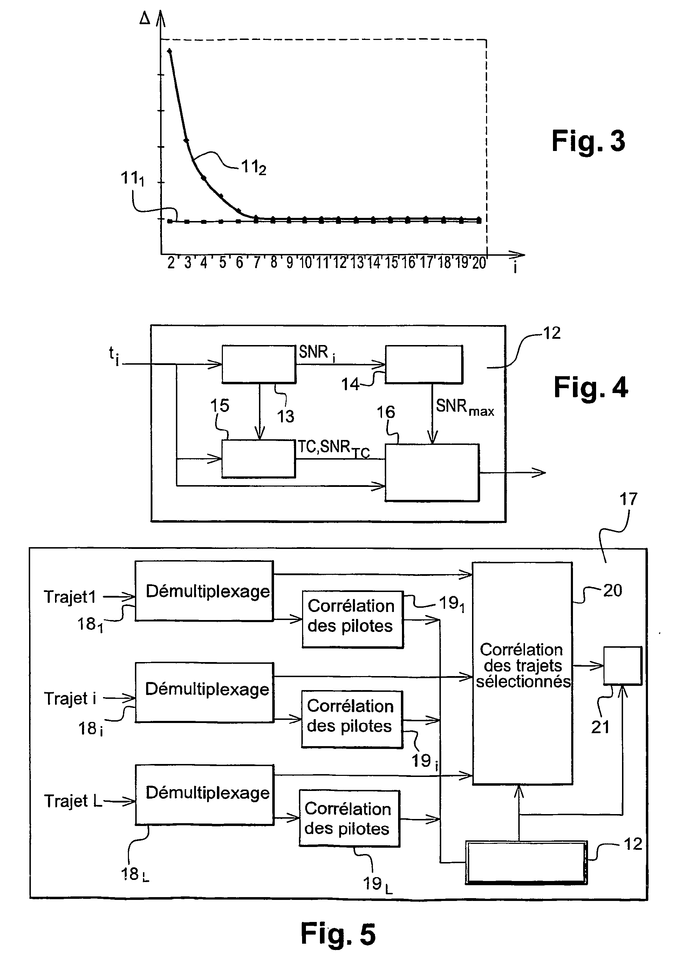

Selon une réalisation particulière, le seuil Δ est déterminé par une fonction de pondération. Selon un premier exemple de fonction de pondération, cette dernière fixe un seuil Δ constant quel que soit l'indice i d'itération. Un tel exemple de fonction de pondération est illustré à la figure 3 par la courbe 11₁. Selon un second exemple de fonction de pondération, cette dernière prend en compte l'indice d'itération de boucle pour déterminer le seuil Δ intervenant dans l'itération. Un tel exemple de fonction de pondération est illustré à la figure 3 par la courbe 11₂. Ainsi, selon l'exemple illustré, la fonction 11₂ de pondération correspondante détermine un seuil Δ dont la valeur décroît au fur et à mesure que l'indice i d'itération augmente puis reste constante au-delà d'un nombre d'itérations donné. La décroissance peut avoir un profil proche de celui d'une courbe en 1/n. Une telle illustration correspond par exemple au cas où tous les trajets, supposés de même puissance, sont tous pris en compte lors d'une sélection mise en oeuvre par un algorithme de type MRC (Maximum Radio Combining) en dessous d'une certaine itération α puis exclus au dessus de cette itération α.

Ainsi, bien qu'un trajet puisse être énergétique, ce trajet et tout trajet supplémentaire seront exclus si l'apport relatif de ce trajet sur la valeur du SNR de sortie est inférieur au seuil Δ déterminé par l'indice d'itération α, indice d'itération qui correspond au nombre de trajet déjà pris en compte dans le cas de l'exemple illustré par la figure 3.

En outre et selon une réalisation particulière, le procédé peut fixer un SNR cible pour le SNR de sortie du récepteur. C'est-à-dire que le procédé selon l'invention est interrompu dès que le SNR de sortie du récepteur dépasse ce SNR cible.

La figure 4 représente schématiquement une réalisation particulière d'un dispositif 12 de sélection selon l'invention. Le dispositif comprend :
- un module 13 apte à sélectionner parmi les différents trajets celui dont la valeur de SNR instantané est la plus élevée parmi les valeurs de SNR instantané des différents trajets,
- un module 14 apte à initialiser la valeur du SNR de sortie du récepteur, à la valeur de SNR instantané la plus élevée parmi les valeurs de SNR instantané des différents trajets,
- un module 15 apte à initialiser un trajet courant à un trajet dont la valeur de SNR instantané est inférieure à la valeur du SNR instantané du trajet précédemment sélectionné et la plus élevée parmi les valeurs de SNR instantané des autres trajets,
- un module 16 apte à effectuer les étapes suivantes qui se déroulent dans une boucle et qui consistent :
   - à sélectionner le trajet courant si une estimation de l'apport du trajet courant sur la valeur du SNR de sortie du récepteur dépasse un seuil donné et, sinon, à sortir de la boucle,
   - à ajouter à la valeur du SNR de sortie du récepteur, la valeur de SNR instantané du trajet courant,
   - à initialiser le trajet courant à un trajet différent des précédents trajets sélectionnés, dont la valeur du SNR instantané est la plus élevée parmi les valeurs de SNR instantané des différents trajets et inférieure à la valeur du SNR instantané du dernier trajet précédemment sélectionné.

Chacun des modules peut correspondre à une partie d'une même ressource matériel d'un récepteur, par exemple un DSP, ou peut correspondre à des circuits indépendants tels des circuits intégrés, tels des puces. Alternativement, les modules peuvent être répartis sur plusieurs ressources qui combinent DSP et circuits.

La figure 5 illustre un exemple particulier d'un récepteur selon l'invention dans un contexte de transmission via un canal aérien. Le récepteur 17 en râteau illustré comprend des modules 18₁,... 18ᵢ,... 18_{L} de démultiplexage, des modules 19₁,... 19ᵢ,... 19_{L} de corrélation des pilotes, un module 20 de corrélation des trajets sélectionnés, un dispositif 12 de sélection selon l'invention et un module 21 de combinaison.

Chaque module 18ᵢ de démultiplexage i a une entrée qui prend en compte un trajet i. Le module 18ᵢ extrait du trajet i les symboles et les données et fournit en sortie ces deux informations.

Chaque module 19ᵢ de corrélation des pilotes calcule un SNR instantané d'un trajet i à partir des symboles fournit par le module de démultiplexage i, et fournit la valeur de SNR instantané en sortie.

Le dispositif 12 de sélection prend en compte les différents SNR instantanés des différents trajets et détermine quels sont les trajets à sélectionner. Cette sélection est fournit au module 20 de corrélation des trajets et au module de combinaison.

Le module 20 de corrélation des trajets effectue la corrélation des trajets sélectionnés et fournit les résultats de corrélation au module 21 de combinaison.

Le module 21 de combinaison combine les résultats de la corrélation issus des trajets sélectionnés selon la technique MRC, Maximum Ratio Combining.

L'utilisation typique d'un objet selon l'invention concerne le domaine de la transmission via un canal aérien, c'est-à-dire de la transmission radio. Dans ce cas le récepteur est typiquement un récepteur radio, et le terminal de communication est typiquement un téléphone mobile incluant un tel récepteur. Le terminal peut prendre d'autres formes et peut correspondre à un PDA, Personnal Digital Assistant, un ordinateur portable ou plus généralement il peut s'agir de tout objet communicant.

## Revendications

1. Procédé (1) de sélection de trajets parmi des trajets issus d'un canal multi trajets, **caractérisé en ce qu'**il comprend au moins des étapes :
- de sélection (2) d'un trajet parmi les différents trajets, dont la valeur d'un rapport signal à bruit, SNR, instantané est la plus élevée parmi les valeurs d'un rapport signal à bruit, SNR, instantané des différents trajets,
- d'initialisation (3) de la valeur d'un rapport signal à bruit, SNR, de sortie du récepteur, à la valeur la plus élevée du rapport signal à bruit, SNR, instantané parmi les valeurs du rapport signal à bruit, SNR, instantané des différents trajets,
- d'initialisation (4) d'un trajet courant, à un trajet dont la valeur du rapport signal à bruit, SNR, instantané est inférieure à la valeur du rapport signal à bruit, SNR, instantané du trajet précédemment sélectionné et la plus élevée parmi les valeurs du rapport signal à bruit, SNR, instantané des autres trajets,
et **en ce qu'**il comprend en outre au moins les étapes suivantes qui se déroulent dans une boucle et qui consistent, pour chaque itération de la boucle :
- à sélectionner (7) le trajet courant si une estimation de l'apport relatif du trajet courant sur la valeur du rapport signal à bruit, SNR, de sortie du récepteur dépasse un seuil donné et, sinon, à sortir (8) de la boucle,
- à ajouter (9) à la valeur du rapport signal à bruit, SNR, de sortie du récepteur, la valeur d'un rapport signal à bruit, SNR, instantané du trajet courant,
- à initialiser (10) le trajet courant à un trajet différent des précédents trajets sélectionnés, dont la valeur du rapport signal à bruit, SNR, instantané est la plus élevée parmi les valeurs du rapport signal à bruit, SNR, instantané des différents trajets et inférieure à la valeur du rapport signal à bruit, SNR, instantané du dernier trajet précédemment sélectionné.

2. Procédé (1) de sélection de trajets selon la revendication 1, dans lequel le seuil donné est déterminé au moyen d'une fonction (11) de pondération.

3. Procédé (1) de sélection de trajets selon la revendication 2, dans lequel la fonction (11) de pondération prend en compte l'indice d'itération de boucle pour déterminer le seuil.

4. Procédé (1) de sélection de trajets selon l'une des revendications précédentes, ledit procédé (1) comprenant en outre une étape de comparaison qui compare chaque nouvelle valeur du rapport signal à bruit, SNR, de sortie du récepteur à une valeur cible pour interrompre le procédé dès le dépassement du seuil.

5. Procédé (1) de sélection de trajets selon l'une des revendications précédentes, ledit procédé comprenant en outre une étape (5) de classement des trajets par valeurs croissantes du rapport signal à bruit, SNR.

6. Dispositif (12) de sélection de trajets issus d'un canal multi trajets **caractérisé en ce qu'**il comprend :
- un module (13) apte à sélectionner parmi les différents trajets celui dont la valeur d'un rapport signal à bruit, SNR, instantané est la plus élevée parmi les valeurs d'un rapport signal à bruit, SNR, instantané des différents trajets,
- un module (14) apte à initialiser la valeur d'un rapport signal à bruit, SNR, de sortie du récepteur, à la valeur la plus élevée du rapport signal à bruit, SNR, instantané parmi les valeurs du rapport signal à bruit, SNR, instantané des différents trajets,
- un module (15) apte à initialiser un trajet courant à un trajet dont la valeur du rapport signal à bruit, SNR, instantané est inférieure à la valeur du rapport signal à bruit, SNR, instantané du trajet précédemment sélectionné et la plus élevée parmi les valeurs du rapport signal à bruit, SNR, instantané des autres trajets,
- un module (16) apte à effectuer les étapes suivantes qui se déroulent dans une boucle et qui consistent :
- à sélectionner le trajet courant si une estimation de l'apport relatif du trajet courant sur la valeur du rapport signal à bruit, SNR, de sortie du récepteur dépasse un seuil donné et, sinon, à sortir de la boucle,
- à ajouter à la valeur du rapport signal à bruit, SNR, de sortie du récepteur, la valeur d'un rapport signal à bruit, SNR, instantané du trajet courant,
- à initialiser le trajet courant à un trajet différent des précédents trajets sélectionnés, dont la valeur du rapport signal à bruit, SNR, instantané est la plus élevée parmi les valeurs du rapport signal à bruit, SNR, instantané des différents trajets et inférieure à la valeur du rapport signal à bruit, SNR, instantané du dernier trajet précédemment sélectionné.

7. Dispositif (12) de sélection de trajets selon la revendication précédente comprenant en outre un module apte à calculer le seuil donné au moyen d'une fonction de pondération.

8. Dispositif (12) de sélection de trajets selon la revendication précédente comprenant en outre un module apte à classer les trajets par valeurs croissantes du rapport signal à bruit, SNR.

9. Récepteur (17) **caractérisé en ce qu'**il comprend un dispositif (12) de sélection de trajets selon l'une des revendications 6 à 8.

10. Terminal de communication **caractérisé en ce qu'**il comprend un dispositif (12) de sélection de trajets selon l'une des revendications 6 à 8.

11. Programme d'ordinateur chargeable dans un récepteur pour sélectionner des trajets parmi des trajets issus d'un canal multi trajets, le programme comprenant au moins des codes pour l'exécution par le récepteur des étapes suivantes, lorsque le programme est exécuté par le récepteur :
- sélection (2) d'un trajet parmi les différents trajets, dont la valeur d'un rapport signal à bruit, SNR, instantané est la plus élevée parmi les valeurs d'un rapport signal à bruit, SNR, instantané des différents trajets,
- initialisation (3) de la valeur d'un rapport signal à bruit, SNR, de sortie du récepteur, à la valeur la plus élevée du rapport signal à bruit, SNR, instantané parmi les valeurs du rapport signal à bruit, SNR, instantané des différents trajets,
- initialisation (4) d'un trajet courant, à un trajet dont la valeur du rapport signal à bruit, SNR, instantané est inférieure à la valeur du rapport signal à bruit, SNR, instantané du trajet précédemment sélectionné et la plus élevée parmi les valeurs du rapport signal à bruit, SNR, instantané des autres trajets,
et au moins des codes pour l'exécution par le dispositif (12) des étapes suivantes qui se déroulent dans une boucle :
- sélectionner (7) le trajet courant si une estimation de l'apport relatif du trajet courant sur la valeur du rapport signal à bruit, SNR, de sortie du récepteur dépasse un seuil donné et, sinon, à sortir (8) de la boucle,
- ajouter (9) à la valeur du rapport signal à bruit, SNR, de sortie du récepteur, la valeur d'un rapport signal à bruit, SNR, instantané du trajet courant,
- initialiser (10) le trajet courant à un trajet différent des précédents trajets sélectionnés, dont la valeur du rapport signal à bruit, SNR, instantané est la plus élevée parmi les valeurs du rapport signal à bruit, SNR, instantané des différents trajets et inférieure à la valeur du rapport signal à bruit, SNR, instantané du dernier trajet précédemment sélectionné.

12. Support d'informations comportant des instructions de programme adaptées à la mise en oeuvre d'un procédé (1) selon l'une quelconque des revendications 1 à 5, lorsque ledit programme est chargé et exécuté dans un récepteur.

## Claims

1. Method (1) for selecting pathways from amongst pathways coming from a multi-pathway channel, **characterized in that** it comprises at least the steps for:
- selection (2) of one pathway from amongst the various pathways, whose value of an instantaneous signal-to-noise ratio, SNR, is the highest amongst the values of a signal-to-noise ratio, SNR, of the various pathways,
- initialization (3) of the value of an output signal-to-noise ratio, SNR, of the receiver at the highest value of the instantaneous signal-to-noise ratio, SNR, amongst the values of the instantaneous signal-to-noise ratio, SNR, of the various pathways,
- initialization (4) of a current pathway at a pathway whose value of the instantaneous signal-to-noise ratio, SNR, is lower than the value of the instantaneous signal-to-noise ratio, SNR, of the previously selected pathway and the highest amongst the values of the instantaneous signal-to-noise ratio, SNR, of the other pathways,
and **in that** it also comprises at least the following steps that are executed in a loop and which consist, for each iteration of the loop:
- in selecting (7) the current pathway if an estimation of the relative contribution of the to-noise ratio, SNR, of the receiver exceeds a given threshold and, otherwise, in exiting (8) from the loop,
- in adding (9) to the value of the output signal-to-noise ratio, SNR, of the receiver the value of an instantaneous signal-to-noise ratio, SNR, for the current pathway,
- in initializing (10) the current pathway at a different pathway from the previous selected pathways, whose value of the instantaneous signal-to-noise ratio, SNR, is the highest amongst the values of the instantaneous signal-to-noise ratio, SNR, of the various pathways and lower than the value of the instantaneous signal-to-noise ratio, SNR, of the last pathway previously selected.

2. Method (1) for selecting pathways according to Claim 1, in which the given threshold is determined by means of a weighting function (11).

3. Method (1) for selecting pathways according to Claim 2, in which the weighting function (11) takes into account the loop iteration index in order to determine the threshold.

4. Method (1) for selecting pathways according to one of the preceding claims, the said method (1) additionally comprising a comparison step which compares each new value of the output signal-to-noise ratio, SNR, of the receiver with a target value in order to interrupt the method when the threshold is exceeded.

5. Method (1) for selecting pathways according to one of the preceding claims, the said method additionally comprising a step (5) for classifying the pathways by increasing values of the signal-to-noise ratio, SNR.

6. Device (12) for selecting pathways coming from a multi-pathway channel, **characterized in that** it comprises:
- a module (13) capable of selecting from amongst the various pathways that pathway whose value of an instantaneous signal-to-noise ratio, SNR, is the highest amongst the values of a signal-to-noise ratio, SNR, of the various pathways,
- a module (14) capable of initializing the value of an output signal-to-noise ratio, SNR, of the receiver at the highest value of the instantaneous signal-to-noise ratio, SNR, amongst the values of the instantaneous signal-to-noise ratio, SNR, of the various pathways,
- a module (15) capable of initializing a current pathway at a pathway whose value of the instantaneous signal-to-noise ratio, SNR, is lower than the value of the instantaneous signal-to-noise ratio, SNR, of the previously selected pathway and the highest amongst the values of the instantaneous signal-to-noise ratio, SNR, of the other pathways,
- a module (16) capable of carrying out the following steps that are executed in a loop and which consist:
- in selecting the current pathway if an estimation of the relative contribution of the current pathway to the value of the output signal-to-noise ratio, SNR, of the receiver exceeds a given threshold and, otherwise, in exiting from the loop,
- in adding to the value of the output signal-to-noise ratio, SNR, of the receiver the value of an instantaneous signal-to-noise ratio, SNR, for the current pathway,
- in initializing the current pathway at a different pathway from the previous selected pathways, whose value of the instantaneous signal-to-noise ratio, SNR, is the highest amongst the values of the instantaneous signal-to-noise ratio, SNR, of the various pathways and lower than the value of the instantaneous signal-to-noise ratio, SNR, of the last pathway previously selected.

7. Device (12) for selecting pathways according to the preceding claim, additionally comprising a module capable of calculating the given threshold by means of a weighting function.

8. Device (12) for selecting pathways according to the preceding claim, additionally comprising a module capable of classifying the pathways by increasing values of the signal-to-noise ratio, SNR.

9. Receiver (17), **characterized in that** it comprises a device (12) for selecting pathways according to one of Claims 6 to 8.

10. Communications terminal, **characterized in that** it comprises a device (12) for selecting pathways according to one of Claims 6 to 8.

11. Computer programme loaded into a receiver for selecting pathways from amongst pathways coming from a multi-pathway channel, the programme comprising at least codes for the execution by the receiver of the following steps, when the programme is executed by the receiver:
- selection (2) of one pathway from amongst the various pathways, whose value of an instantaneous signal-to-noise ratio, SNR, is the highest amongst the values of a signal-to-noise ratio, SNR, of the various pathways,
- initialization (3) of the value of an output signal-to-noise ratio, SNR, of the receiver at the highest value of the instantaneous signal-to-noise ratio, SNR, amongst the values of the instantaneous signal-to-noise ratio, SNR, of the various pathways,
- initialization (4) of a current pathway at a pathway whose value of the instantaneous signal-to-noise ratio, SNR, is lower than the value of the instantaneous signal-to-noise ratio, SNR, of the previously selected pathway and the highest amongst the values of the instantaneous signal-to-noise ratio, SNR, of the other pathways,
and at least codes for the execution by the device (12) of the following steps that are executed in a loop:
- selecting (7) the current pathway if an estimation of the relative contribution of the current pathway to the value of the output signal-to-noise ratio, SNR, of the receiver exceeds a given threshold and, otherwise, in exiting (8) from the loop,
- adding (9) to the value of the output signal-to-noise ratio, SNR, of the receiver the value of an instantaneous signal-to-noise ratio, SNR, for the current pathway,
- initializing (10) the current pathway at a different pathway from the previous selected pathways, whose value of the instantaneous signal-to-noise ratio, SNR, is the highest amongst the values of the instantaneous signal-to-noise ratio, SNR, of the various pathways and lower than the value of the instantaneous signal-to-noise ratio, SNR, of the last pathway previously selected.

12. Information media comprising programme instructions designed for the implementation of a method (1) according to any one of Claims 1 to 5, when the said programme is loaded and executed in a receiver.

## Patentansprüche

1. Verfahren (1) zur Auswahl von Wegen unter von einem Mehrwege-Kanal stammenden Wegen, **dadurch gekennzeichnet, dass** es mindestens folgende Schritte enthält:
- Auswahl (2) eines Wegs unter den verschiedenen Wegen, dessen augenblicklicher Wert eines Signal-Rausch-Verhältnisses SNR der höchste unter den Werten eines augenblicklichen Signal-Rausch-Verhältnisses SNR der verschiedenen Wege ist,
- Initialisierung (3) des Werts eines Signal-Rausch-Verhältnisses SNR am Ausgang des Empfängers auf den höchsten Wert des augenblicklichen Signal-Rausch-Verhältnisses SNR unter den Werten des augenblicklichen Signal-Rausch-Verhältnisses SNR der verschiedenen Wege,
- Initialisierung (4) eines laufenden Wegs auf einen Weg, dessen Wert des augenblicklichen Signal-Rausch-Verhältnisses SNR geringer als der Wert des augenblicklichen Signal-Rausch-Verhältnisses SNR des vorher ausgewählten Wegs und der höchste unter den Werten des augenblicklichen Signal-Rausch-Verhältnisses SNR der anderen Wege ist,
und dass es außerdem mindestens die folgenden Schritte enthält, die in einer Schleife ablaufen und die für jede Iteration der Schleife darin bestehen:
- den laufenden Weg auszuwählen (7), wenn eine Schätzung des relativen Beitrags des laufenden Wegs zum Wert des Signal-Rausch-Verhältnisses SNR am Ausgang des Empfängers eine gegebene Schwelle überschreitet, und sonst die Schleife zu verlassen (8),
- zum Wert des Signal-Rausch-Verhältnisses SNR am Ausgang des Empfängers den Wert eines augenblicklichen Signal-Rausch-Verhältnisses SNR des laufenden Wegs hinzuzufügen (9),
- den laufenden Weg auf einen Weg zu initialisieren (10), der sich von den vorhergehenden ausgewählten Wegen unterscheidet, dessen Wert des augenblicklichen Signal-Rausch-Verhältnisses SNR der höchste unter den Werten des augenblicklichen Signal-Rausch-Verhältnisses SNR der verschiedenen Wege und geringer als der Wert des augenblicklichen Signal-Rausch-Verhältnisses SNR des letzten vorher ausgewählten Wegs ist.

2. Verfahren (1) zur Auswahl von Wegen nach Anspruch 1, bei dem die gegebene Schwelle mittels einer Gewichtungsfunktion (11) bestimmt wird.

3. Verfahren (1) zur Auswahl von Wegen nach Anspruch 2, bei dem die Gewichtungsfunktion (11) den Schleifeniterationsindex berücksichtigt, um die Schwelle zu bestimmen.

4. Verfahren (1) zur Auswahl von Wegen nach einem der vorhergehenden Ansprüche, wobei das Verfahren (1) außerdem einen Vergleichsschritt enthält, der jeden neuen Wert des Signal-Rausch-Verhältnisses SNR am Ausgang des Empfängers mit einem Zielwert vergleicht, um das Verfahren bei Überschreiten der Schwelle zu unterbrechen.

5. Verfahren (1) zur Auswahl von Wegen nach einem der vorhergehenden Ansprüche, wobei das Verfahren außerdem einen Schritt (5) der Einordnung der Wege nach zunehmenden Werten des Signal-Rausch-Verhältnisses SNR enthält.

6. Vorrichtung (12) zur Auswahl von Wegen, die von einem Mehrwege-Kanal stammen, **dadurch gekennzeichnet, dass** sie enthält:
- ein Modul (13), das fähig ist, unter den verschiedenen Wegen denjenigen auszuwählen, dessen Wert eines augenblicklichen Signal-Rausch-Verhältnisses SNR der höchste unter den Werten eines augenblicklichen Signal-Rausch-Verhältnisses SNR der verschiedenen Wege ist,
- ein Modul (14), das fähig ist, den Wert eines Signal-Rausch-Verhältnisses SNR am Ausgang des Empfängers auf den höchsten Wert des augenblicklichen Signal-Rausch-Verhältnisses SNR unter den Werten des augenblicklichen Signal-Rausch-Verhältnisses SNR der verschiedenen Wege zu initialisieren,
- ein Modul (15), das fähig ist, einen laufenden Weg auf einen Weg zu initialisieren, dessen Wert des augenblicklichen Signal-Rausch-Verhältnisses SNR geringer als der Wert des augenblicklichen Signal-Rausch-Verhältnisses SNR des vorher ausgewählten Wegs und der höchste unter den Werten des augenblicklichen Signal-Rausch-Verhältnisses SNR der anderen Wege ist,
- ein Modul (16), das fähig ist, die folgenden Schritte auszuführen, die in einer Schleife ablaufen und darin bestehen:
- den laufenden Weg auszuwählen, wenn eine Schätzung des relativen Beitrags des laufenden Wegs zum Wert des Signal-Rausch-Verhältnisses SNR am Ausgang des Empfängers eine gegebene Schwelle übersteigt, und sonst die Schleife zu verlassen,
- zum Wert des Signal-Rausch-Verhältnisses SNR am Ausgang des Empfängers den Wert eines augenblicklichen Signal-Rausch-Verhältnisses SNR des laufenden Wegs hinzuzufügen,
- den laufenden Weg auf einen anderen Weg der vorhergehenden ausgewählten Wege zu initialisieren, dessen Wert des augenblicklichen Signal-Rausch-Verhältnisses SNR der höchste unter den Werten des augenblicklichen Signal-Rausch-Verhältnisses SNR der verschiedenen Wege und geringer als der Wert des augenblicklichen Signal-Rausch-Verhältnisses SNR des letzten vorher ausgewählten Wegs ist.

7. Vorrichtung (12) zur Auswahl von Wegen nach dem vorhergehenden Anspruch, die außerdem ein Modul enthält, das fähig ist, die gegebene Schwelle mittels einer Gewichtungsfunktion zu berechnen.

8. Vorrichtung (12) zur Auswahl von Wegen nach dem vorhergehenden Anspruch, die außerdem ein Modul enthält, das fähig ist, die Wege nach zunehmenden Werten des Signal-Rausch-Verhältnisses SNR einzuordnen.

9. Empfänger (17), **dadurch gekennzeichnet, dass** er eine Vorrichtung (12) zur Auswahl von Wegen nach einem der Ansprüche 6 bis 8 enthält.

10. Kommunikations-Endgerät, **dadurch gekennzeichnet, dass** es eine Vorrichtung (12) zur Auswahl von Wegen nach einem der Ansprüche 6 bis 8 enthält.

11. Computerprogramm, das in einen Empfänger geladen werden kann, um Wege unter Wegen auszuwählen, die von einem Mehrwege-Kanal stammen, wobei das Programm mindestens Codes für die Ausführung der folgenden Schritte durch den Empfänger enthält, wenn das Programm vom Empfänger ausgeführt wird:
- Auswahl (2) eines Wegs unter den verschiedenen Wegen, dessen Wert eines augenblicklichen Signal-Rausch-Verhältnisses SNR der höchste unter den Werten eines augenblicklichen Signal-Rausch-Verhältnisses SNR der verschiedenen Wege ist,
- Initialisierung (3) des Werts eines Signal-Rausch-Verhältnisses SNR am Ausgang des Empfängers auf den höchsten Wert des augenblicklichen Signal-Rausch-Verhältnisses SNR unter den Werten des augenblicklichen Signal-Rausch-Verhältnisses SNR der verschiedenen Wege,
- Initialisierung (4) eines laufenden Wegs auf einen Weg, dessen Wert des augenblicklichen Signal-Rausch-Verhältnisses SNR geringer als der Wert des augenblicklichen Signal-Rausch-Verhältnisses SNR des vorher ausgewählten Wegs und der höchste unter den Werten des augenblicklichen Signal-Rausch-Verhältnisses SNR der anderen Wege ist,
und mindestens Codes für die Ausführung durch die Vorrichtung (12) der folgenden Schritte enthält, die in einer Schleife ablaufen:
- Auswahl (7) des laufenden Wegs, wenn eine Schätzung des relativen Beitrags des laufenden Wegs zum Wert des Signal-Rausch-Verhältnisses SNR am Ausgang des Empfängers eine gegebene Schwelle überschreitet, und sonst Verlassen (8) der Schleife,
- Hinzufügen (9) zum Wert des Signal-Rausch-Verhältnisses SNR am Ausgang des Empfängers des Werts eines augenblicklichen Signal-Rausch-Verhältnisses SNR des laufenden Wegs,
- Initialisierung (10) des laufenden Wegs auf einen anderen Weg der vorhergehenden ausgewählten Wege, dessen Wert des augenblicklichen Signal-Rausch-Verhältnisses SNR der höchste unter den Werten des augenblicklichen Signal-Rausch-Verhältnisses SNR der verschiedenen Wege und geringer als der Wert des augenblicklichen Signal-Rausch-Verhältnisses SNR des letzten vorher ausgewählten Wegs ist.

12. Informationsträger, der Programmanweisungen aufweist, die für die Anwendung eines Verfahrens (1) nach einem der Ansprüche 1 bis 5 geeignet sind, wenn das Programm in einen Empfänger geladen und ausgeführt wird.
